# EUROPÄISCHE PATENTSCHRIFT

(11) **EP 1 757 778 B1**
(45) Veröffentlichungstag und Bekanntmachung des Hinweises auf die Patenterteilung: **23.12.2015**
(21) Anmeldenummer: 05018270.8
(22) Anmeldetag: 23.08.2005
(51) Int. Cl.: F23R 3/18, F22B 1/18

(54) **Abgasführung einer Gasturbine sowie Verfahren zum Vermischen des Abgases der Gasturbine**
Exhaust gas duct of a gas turbine and method for mixing the exhaust gas
Conduit d'échappement d'une turbine à gaz et méthode pour mélanger le gaz d'échappement

(43) Veröffentlichungstag der Anmeldung: 28.02.2007
(73) Patentinhaber: Balcke-Dürr GmbH, 40882 Ratingen (DE)
(72) Erfinder: Podhorsky, Miroslav, Dr., 40882 Ratingen (DE); Leser, Stefan, 47918 Tönisvorst (DE); Kaatz, Michael, 40878 Ratingen (DE)
(74) Vertreter: Lang, Friedrich

(56) Entgegenhaltungen:
- EP-A- 0 638 732
- DE-A1- 19 542 521
- GB-A- 739 935
- US-A- 5 461 853
- US-A- 5 791 136

## Beschreibung

Die Erfindung betrifft eine Abgasführung einer Gasturbine. Die Erfindung betrifft ferner ein Verfahren zum Vermischen des Abgases einer Gasturbine gemäß dem Oberbegriff des Anspruchs 11.

Gasturbinen werden unter anderem in Kraftwerken, insbesondere in Gas- und Dampfkraftwerken (GuD-Kraftwerke), zur Stromerzeugung eingesetzt. Bei GuD-Kraftwerken werden Gasturbinen und Dampfturbinen in einer Gesamtanlage zum Antrieb von Generatoren genutzt. Die Gasturbine erzeugt durch Verbrennung von fossilen Brennstoffen mittels eines Generators Strom. Die dabei entstehenden sehr heißen Abgase werden einer Abgasführung zugeführt und dann über eine Gasweiche oder direkt in einen Abhitzekessel eingeleitet. Der Abhitzekessel wirkt als Verdampfer und erzeugt mittels der heißen Abgase der Gasturbine Dampf zum Antrieb der Dampfturbine, die dann wiederum einen weiteren Generator zur Stromerzeugung antreibt.

Im Allgemeinen ist es wünschenswert, GuD-Kraftwerke möglichst kompakt auszubilden. Die Kompaktheit hängt in starkem Masse davon ab, wie lang die Abgasführung zwischen Gasturbinenaustritt und dem Eintritt in den Abhitzekessel oder in die Gasweiche ausgebildet sein muss. Die Querschnittsfläche des Strömungskanals der Abgasführung im Bereich des Gasturbinenaustrittstutzens ist um ein Vielfaches kleiner als die Querschnittsfläche beim Eintritt in den Abhitzekessel oder in die Gasweiche. Im Falle des Abhitzekessels ist dies darauf zurückzuführen, dass zur Erzielung eines guten Wirkungsgrades des GuD-Kraftwerks die vom heißen Abgas anzuströmenden wärmeübertragenden Flächen im Abhitzekessel möglichst groß sein sollen. Auch bei der Gasweiche ist ein großflächiges Anströmen wünschenswert. Ferner ist es in beiden Fällen wünschenswert, dass die Anströmung möglichst gleichmäßig über den gesamten Kanalquerschnitt erfolgt. Ein Beispiel für eine Abgasführung mit einem sich in Hauptströmungsrichtung aufweitenden Strömungskanal-Querschnitt ist aus der US 5,461,853 bekannt.

Es ist bekannt, Leitbleche, Umlenkbleche, Umlenkgitter oder ähnliche Strukturen zur Erzeugung von Verwirbelung als Einbauflächen im Bereich des sich aufweitenden Querschnitts des Strömungskanals der Abgasführung einzubringen, um ein möglichst konstantes Anliegen der Strömung an der sich in Hauptströmungsrichtung aufweitenden Strömungskanalwand zu erzielen. Hierdurch soll es möglich werden, die Abgasführung möglichst kurz auszubilden und trotzdem eine relativ gleichmäßige Strömung beim Eintritt in den Abhitzekessel oder in die Gasweiche zu erhalten. Mit den bisher bekannten Strukturen wird ein konstantes Anliegen der Strömung an der sich aufweitenden Strömungswand, insbesondere bei zunehmenden Öffnungswinkel des Strömungskanals, aber nur bedingt erreicht. Weiterhin bringen die bekannten Einbauflächen häufig hohe Druckverluste mit sich und haben zum Teil nur geringe Verwirbelungseffekte.

Daher ist es Aufgabe der Erfindung, die Abgasführung dahingehend zu verbessern, dass sie möglichst kompakt ausbildbar ist und gleichzeitig hohe Druckverluste vermieden werden.

Die Lösung dieser Aufgabe gelingt jeweils mit einer Abgasführung gemäß den Ansprüchen 1 und 2 sowie mit einem Verfahren zum Vermischen des Abgases gemäß Anspruch 11.

Es handelt sich hier also zunächst um eine grundsätzlich bekannte Abgasführung einer Gasturbine, die einen Strömungskanal umfasst, dessen Querschnitt sich zumindest bereichsweise in Hauptströmungsrichtung aufweitet und in der die Strömung beeinflussende Einbauflächen eingebracht sind. Weiterhin ist der Abgasführung ein Abhitzekessel oder eine Gasweiche nachgeschaltet. Die erfindungsgemäße Abgasführung unterscheidet sich nun von den bekannten Abgasführungen dadurch, dass die Einbauflächen als Vorderkantenwirbel erzeugende Wirbelvorrichtung ausgebildet sind, wobei die Wirbelvorrichtung im in sich aufweitenden Querschnittsbereich des Strömungskanals angeordnet ist. Ferner ist die Wirbelvorrichtung so ausgebildet, dass die von ihr erzeugten Vorderkantenwirbel den Abgasstrom beim Eintritt in den Abhitzekessel bzw. in die Casweiche gleichmäßig über die Strömungsquerschnittsfläche verteilen.

Bei dieser Wirbelvorrichtung handelt es sich um ein grundsätzlich bekanntes Einbauelement, wie es beispielsweise, in der EP 0 638 732 A1 bereits für einen Diffusor beschrieben worden ist. Der Inhalt dieser Druckschrift wird durch Bezugnahme als auch für die vorliegende Erfindung geltend angesehen. Wesentlich an dieser Wirbelvorrichtung ist, dass sie Vorderkantenwirbel erzeugt. Diese auch als Wirbelschleppen bezeichneten Randwirbel kann man sich dabei als kleine in Strömungsrichtung gerichtete Tornados vorstellen, deren Durchmesser in Strömungsrichtung anwachsen. Die Wirbel drehen sich dabei von den Seitenrändern der Wirbelvorrichtung zunächst nach Außen und rollen sich dann nach nach Innen ein, wodurch sich gegenüberliegende Wirbel gegenläufig drehen. Blickt man stromabwärts auf eine derartige Wirbelvorrichtung, so sehen die Vorderkantenwirbel wie zwei sich gegenläufig einrollende Schnecken aus.

Diese Vorderkantenwirbel haben den Vorteil, dass sie ausgesprochen stabile Wirbelsysteme sind, die zu einer besonders effektiven Durchmischung der Gasströmung führen. Dadurch bildet sich ein weitestgehend gleichmäßig turbulentes Strömungsverhalten hinter einer solchen Wirbelvorrichtung. Gleichzeitig ist es möglich, die Wirbelvorrichtung so auszurichten, dass die von ihr erzeugte turbulente Strömung sich praktisch durchgängig an die sich in Hauptströmungsrichtung aufweitende Strömungskanalwand anlegt. Somit kann der Strömungskanalquerschnitt auf einer sehr kurzen Strecke in Hauptströmungsrichtung sehr stark aufgeweitet sein, so dass die Abgasführung sehr kompakt ausbildbar ist und trotzdem am Strömungskanalende beim Eintritt in den Abhitzekessel oder in die Gasweiche eine über den Strömungsquerschnitt gleichmäßige Strömungsverteilung vorhanden ist. Die Wirbelvorrichtung wird also gezielt so ausgerichtet, dass eine gleichmäßige Strömungsverteilung über den Strömungskanalquerschnitt nach einer möglichst kurzen Strömungsstrecke eintritt. Gleichzeitig werden durch die Wirbelvorrichtung praktisch keine Druckverluste hervorgerufen, da die Wirbeleinbaufläche einen verhältnismäßig geringen Strömungswiderstand hat. Sie wirkt nicht mit ihrer gesamten Oberfläche als Leitfläche, sondern erzeugt mit ihren vorderen Kanten Wirbelfelder, die sich in Strömungsrichtung selbsttätig erweitern, ohne dass für diese Erweiterung zusätzliche Einbau- oder Leitflächen erforderlich wären, und die strömungsarmen Räume im Kanal ausfüllen. Dadurch wird der Gesamtdruckverlust verringert.

Ein weiterer Vorteil der vorliegenden Erfindung besteht darin, dass das durch die Vorderkantenwirbel hervorgerufene, weitestgehend gleichmäßig turbulente Strömungsverhalten des Abgases hinter der Wirbelvorrichtung weniger stark von der gerade durch den Strömungskanal strömenden Gasmenge abhängig ist als bei bisher verwendeten Einbauflächen. Somit muss die Wirbelvorrichtung nicht ständig an jede Schwankung der Gasmenge angepasst werden, wenn z.B. die Leistung der Gasturbine hoch- oder runtergefahren wird.

Ferner ist es bekannt, in Abgasführungen Brenner zur Zusatzfeuerung des Abgasstroms anzuordnen. Die Brenner werden häufig durch fossile Brennstoffe, beispielsweise Ergas, betrieben. Dieses Erdgas wird mit dem noch im Abgas enthaltenen Sauerstoff in einer Zusatzfeuerung verbrannt. Durch diese durch die Brenner ausgeführte Zusatzfeuerung lässt sich der Wirkungsgrad eines GuD-Kraftwerks erhöhen und die Stromkennzahl der Dampfturbine kann an den jeweiligen Bedarf angepasst werden.

Derartige Brenner erzeugen in der Abgasführung heiße Abgassträhnen, die mit dem restlichen Turbinenabgas vermischt werden müssen, bevor es zur Einströmung in den Abhitzekessel oder in die Gasweiche kommt. Nachteilig bei den bekannten Abgasführungen mit Brennern im Strömungskanal ist, dass der Abstand zwischen Brenner und Eintritt in den Abhitzekessel bzw. in die Gasweiche relativ groß sein muss, damit es zu einer vollständigen Durchmischung des Abgases vor Verlassen der Abgasführung kommt.

Die Wirbelvorrichtung so ausgebildet und ausgerichtet, dass die von ihr erzeugten Vorderkantenwirbel die heißen Abgassträhnen des mindestens einen Brenners mit dem restlichen Abgas zielgerichtet vermischen. Dadurch kann die Durchmischung der heißen Abgassträhnen mit dem übrigen Abgas auf einer relativ kurzen Strecke erreicht werden, so dass der Abstand zwischen Brennern und Abhitzekessel bzw. Gasweiche verringert werden kann, was wiederum zu einer insgesamt kompakteren Ausbildung der Abgasführung führt.

Grundsätzlich ist es möglich, den mindestens einen Brenner in Hauptströmungsrichtung gesehen stromaufwärts oder stromabwärts von der Wirbelvorrichtung anzuordnen. Auch ist es möglich, den mindestens einen Brenner neben der Wirbelvorrichtung anzuordnen. Bei der Abgasführung gemäß den Ansprüchen 1 und 2 ist die Wirbelvorrichtung stromaufwärts vom mindestens einen Brenner angeordnet, da dadurch die heißen Gassträhnen direkt nach dem Entstehen von bereits ausgebildeten Vorderkantenwirbeln erfasst werden und somit die benötigte Durchmischungsstrecke weiter verkürzt werden kann.

In einer weiteren bevorzugten Ausführungsform ist der Brenner im Bereich hinter einer Anströmkante der Wirbelvorrichtung, d. h. im Bereich der der Zuströmung des Abgasstroms abgewandten Rückseite der Wirbelvorrichtung, angeordnet. Vorteilhaft ist hierbei, dass der relativ kleine Volumenstrom der heißen Abgassträhnen von den in der Entstehung begriffenen Vorderkantenwirbeln des größeren Volumenstrom des übrigen, kälteren Abgases erfasst wird und eine Homogenisierung auf sehr kurzer Mischstrecke erreicht werden kann. Besonders vorteilhaft ist es weiterhin, wenn sich der Brenner im Bereich der vorderen Hälfte der Wirbelvorrichtung befindet, da dadurch die heißen Abgassträhnen von jenen früh einsetzenden Wirbelfeldern erfasst werden, die im vordersten Kantenbereich der Wirbelvorrichtung generiert werden. Dadurch kann die Mischstrecke weiter verkürzt werden.

Weiterhin können mehrere Brenner in der Abgasführung vorhanden sein, wobei die Wirbelvorrichtung so auszubilden ist, dass sie die heißen Abgassträhnen sämtlicher Brenner mit dem restlichen Abgas vermischt und sich so einer Vergleichmäßigung des Abgasstromes über den gesamten Strömungs-kanalquerschnitt einstellt. Die Brenner können in Hauptströmungsrichtung gesehen sowohl nebeneinander als auch hintereinander angeordnet sein.

In einer weiteren bevorzugten Ausführungsform sind die von der Wirbelvorrichtung erzeugten Vorderkantenwirbel so ausgerichtet, dass die daraus resultierende Strömung beim Eintritt in den Abhitzekessel oder in die Gasweiche eine über den Strömungsquerschnitt gesehen im Wesentlichen konstante Geschwindigkeit aufweist. Dies ist vorteilhaft, da es zur weiteren Optimierung des Verdampfungsprozess im Abhitzekessel bzw. zur Verbesserung der Gasstromführung in der Gasweiche beiträgt.

Der aus der Gasturbine austretende Abgasstrom weist nicht nur eine hohe Axialgeschwindigkeit in Hautströmungsrichtung auf, sondern hat gleichzeitig einen Drall um die Hauptströmungsachse, der durch die Strömung und die Expansion der Gase in den letzten Schaufelreihen der Turbine entsteht. Dieser Drall ist ein Globaldrall, da der gesamte Abgasstrom um die Hauptströmungsachse rotiert. Er kann eine Tangentialgeschwindigkeit von 30 m/s und mehr erreichen. Nachteilig hierbei ist, dass dieser Globaldrall Schwingungen im Abhitzekessel oder in der Gasweiche erzeugen kann, die zu Schädigungen führen können.

In einer weiteren Ausführungsform der Erfindung ist die Wirbelvorrichtung so ausgebildet, dass das von der Wirbelvorrichtung erzeugte Vorderkantenwirbelsystem dem Globaldrall des Abgasstromes entgegenwirkt, so dass dieser, bevor der Abgasstrom in den Abhitzekessel oder in die Gasweiche eintritt, im Wesentlichen eliminiert und die globale Tangentialgeschwindigkeit somit nahe Null reduziert wird. Dadurch wird auch das Risiko, dass die oben beschriebenen Schäden auftreten, deutlich reduziert.

Eine Wirbelvorrichtung sollte wenigstens eine Wirbelscheibe aufweisen. Solche Wirbelscheiben können beispielsweise kreisförmig, elliptisch, rechteckig, oval, parabelförmig, rautenförmig oder auch dreieckig ausgeführt sein, wobei Scheiben in gerader oder geknickter Ausführungsform bzw. auch in dreieckigen oder tropfenförmigen Querschnittsausführungen geeignet sind.

Weiterbildend weist eine Wirbelvorrichtung mehrere nebeneinander in einem Strömungsquerschnitt angeordnete Wirbelscheiben auf. Dabei können die Wirbelscheiben miteinander verkettet oder auch einzeln individuell an der Wandung befestigt sein. Auch können so kettenartig um den gesamte Querschnitt herum verlaufende Wirbelvorrichtungen gebildet werden. Das bedeutet, dass, beispielsweise bei einem rechteckigen Anströmkanal, jeweils mindestens eine Wirbelscheibe oben, unten, links und rechts angeordnet ist.

Bevorzugt weist eine Wirbelvorrichtung mehrere kaskadierend angeordnete Wirbelscheiben auf. Unter kaskadierend versteht man hier eine funktionale Abfolge von hintereinander angeordneten Wirbelscheiben. Diese geben somit ein treppenförmig angeordnetes Bild wieder, wobei auch schräg oder diagonal versetzte Anordnungen der einzelnen Wirbelscheiben denkbar sind. Wichtig ist nur, dass der Gasstrom von einer Wirbelscheibe zur nächsten weitergeleitet wird, wobei eine optimale Induktionswirkung auftritt.

Zweckmäßigerweise ist der Anstellwinkel der Wirbelscheibe im Bezug auf die Hauptströmungsrichtung verstellbar ausgebildet. Durch die Verstellbarkeit des Anstellwinkels ist eine Adaption der Wirbelvorrichtung an die jeweiligen Gegebenheiten der Gasführung möglich. So kann z.B. Strömungszuständen während des Anfahrens der Gasturbine Rechnung getragen werden und die Wirbelscheibe kann in dieser Anfahrphase in einem anderen Winkel angestellt werden als später während der Betriebsphase der Gasturbine. Auch kann durch die Verstellbarkeit die Leistung des Abhitzekessels optimiert werden. Sind mehrere Wirbelscheiben vorhanden, können diese jeweils einzeln, unabhängig voneinander verstellbar sein oder als Wirbelscheibensystem ausgebildet sein, welches z. B. aus einer Mehrzahl von Wirbelscheiben besteht, die auf einer gemeinsamen Schwenkachse angeordnet sind. So können mehrere Wirbelscheiben gemeinsam in einem zueinander fest definierten funktionalen Zusammenhang in ihrer Wirkungsweise durch Drehen oder Verschwenken verändert werden.

Erfindungsgemäß wird die Aufgabe auch durch ein Verfahren zum Vermischen des Abgases einer Gasturbine innerhalb eines Strömungskanals, der zumindest bereichsweise einen sich in Hauptströmungsrichtung aufweitenden Querschnitt aufweist, mit heißen Abgassträhnen, die durch mindestens einen im Strömungskanal angeordneten Brenner erzeugt werden, dadurch gelöst, dass wenigstens ein Vorderkantenwirbelsystem im divergierenden Bereich des Strömungskanals erzeugt wird. Ein Vorderkantenwirbelsystem besteht aus jeweils zwei, gegeneinander und nach Innen verdrehenden Vorderkantenwirbel, wobei das Vorderkantenwirbelsystem von einer Wirbelscheibe erzeugt wird. Das Vorderkantenwirbelsystem ist so auszurichten, dass es die heißen Abgassträhnen des mindestens einen Brenner erfasst und sich so auf einer möglichst kurzen Strecke eine Vermischung dieser Strähnen mit dem restlichen Abgas einstellt.

In einer bevorzugten Weiterbildung des erfindungsgemäßen Verfahrens wird das Vorderkantenwirbelsystem so ausgerichtet, dass der Globaldrall, den der Abgasstrom beim Verlassen der Gasturbine aufweist, im Wesentlichen aufgehoben wird.

Die Erfindung wird nachfolgend anhand von in der Zeichnung dargestellten Ausführungsbeispielen weiter erläutert. Es zeigen schematisch:
- Fig. 1: eine Seitenansicht einer Abgasführung;
- Fig. 2: eine Seitenansicht einer weiteren Abgasführung;
- Fig. 3: den in Fig. 1 angedeuteten Schnitt A-A;
- Fig. 4: den in Fig. 2 angedeuteten Schnitt B-B;
- Fig. 5: eine Wirbelscheibe mit kreisförmiger Grundfläche;
- Fig. 6: eine Wirbelscheibe mit ellipsenförmiger Grundfläche;
- Fig. 7: eine Wirbelscheibe mit kreisabschnittsförmiger Grundfläche;
- Fig. 8: eine Wirbelscheibe mit trapezförmiger Grundfläche;
- Fig. 9: eine Wirbelscheibe mit rautenförmiger Grundfläche;
- Fig. 10: eine Wirbelscheibe mit dreiecksförmiger Grundfläche;
- Fig. 11: eine Wirbelscheibe mit trapezförmiger Grundfläche und einem Längsknick;
- Fig. 12: den in Fig. 11 angedeuteten Schnitt C-C;
- Fig. 13: eine Wirbelscheibe mit dreieckiger Grundfläche und abgewinkelten Rändern; und
- Fig. 14: den in Fig. 13 angedeuteten Schnitt D-D.

Bei den im Folgenden beschriebenen Ausführungsformen sind gleiche Bestandteile mit gleichen Bezugszeichen versehen.

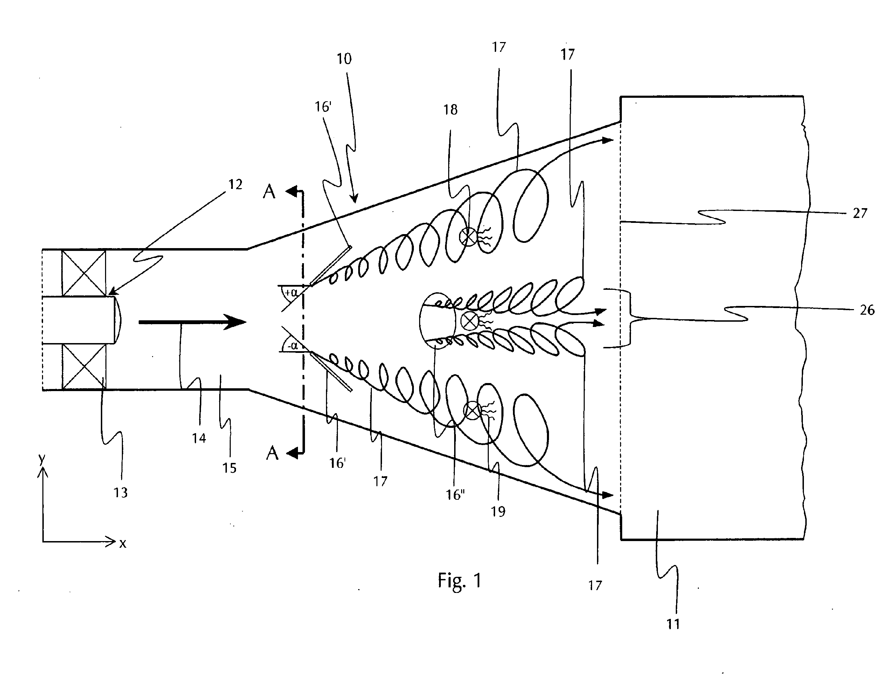

Fig. 1 zeigt eine Abgasführung 10, die einen Strömungskanal 15 aufweist, der sich an eine Gasturbine 12, die Schaufelräder 13 umfasst, anschließt und in einen Abhitzekessel 11 mündet. Der mit dem Bezugszeichen 14 bezeichnete Pfeil kennzeichnet die Hauptströmungsrichtung des Abgases der Turbine 12. Bei der hier gezeigten Abgasführung 10 verläuft die Hauptströmungsrichtung 14 in Richtung der Strömungskanallängsachse in x-Richtung. Der Strömungskanal 15 ist rechteckig ausgebildet und weist in seinem vorderen Bereich, der sich direkt an die Gasturbine 12 anschließt, parallel verlaufende Wände auf. Im weiteren Verlauf des Strömungskanals 15 weitet sich dessen Querschnitt sowohl nach unten als auch nach oben hin auf, wobei die Aufweitung im oberen als auch im unteren Bereich eine konstante Steigung aufweist und sich bis zum Anschluss des Strömungskanals 15 an den Abhitzekessel 11 fortsetzt. Im in Hauptströmungsrichtung 14 gesehen stromaufwärtige Teil des divergierenden Bereichs des Strömungskanals 15 sind zwei übereinander angeordnete Wirbelscheiben 16' vorhanden. Diese Wirbelscheiben 16' sind gegenüber der Hauptströmungsrichtung 14 in einem Winkel ± α angewinkelt, wobei, mit Bezug auf die Hauptströmungsrichtung 14, die obere Wirbelscheibe 16' mit einem positiven Winkel α abgewinkelt ist und die untere Wirbelscheibe 16' mit einem negativen Winkel α. Ferner sind die Wirbelscheiben 16' achsensymmetrisch zueinander angeordnet, wobei die Spiegelachse in x-Richtung verläuft. So erzeugen sie auf ihrer der Strömung abgewandten Leeseite Vorderkantenwirbel 17, die sich konusförmig aufweitend quer zur Hauptströmungsrichtung stromabwärts ausbreiten. Die Wirbelscheiben 16' sind so ausgerichtet, dass die Strömung, durch die von ihnen erzeugten Vorderkantenwirbel, praktisch durchgängig an den sich aufweitenden Strömungskanalwänden anliegt und kein Strömungsabriss auftritt. Die Vorderkantenwirbel 17 bilden hinter jeder Wirbelscheibe 16' ein Vorderkantenwirbelsystem 26, bei dem es sich um zwei gegenläufig zur Mitte der Wirbelscheiben 16' hinrotierende Wirbel 17 handelt, die sehr stabil und kräftig sind. Ein solches Vorderkantenwirbelsystem 26 ist in Fig. 1 im Zusammenhang mit einer anderen, weiter stromabwärts angeordneten Wirbelscheibe 16" dargestellt. Diese Wirbelscheibe 16" ist quer zur Hauptströmungsrichtung 14 angeordnet und gegenüber einer in y-Richtung verlaufenden Achse abgewinkelt, so dass auch an ihrer der Strömung abgewandten Leeseite Vorderkantenwirbel 17 entstehen. Die Wirbelscheibe 16" ist in y-Richtung gesehen in etwa mittig zwischen den beiden vorderen Wirbelscheiben 16' angeordnet. Sämtliche Wirbelscheiben 16', 16" weisen eine kreisförmige Grundfläche auf und sind identisch ausgebildet.

Weiter stromabwärts, in Hauptströmungsrichtung 14 gesehen, sind drei Brenner 18 übereinander, entlang einer in y-Richtung verlaufenden Achse, angeordnet. Durch Verbrennung von Erdgas mit dem im Abgas enthaltenen Restsauerstoff erzeugen diese Brenner 18 heiße Abgassträhnen 19, welche stromabwärts in Richtung des Abhitzekessels 11 strömen. Die Wirbelscheiben 16', 16" sind so ausgerichtet, dass die von ihnen erzeugten Vorderkantenwirbel 17 die heißen Abgassträhnen 19 der Brenner 18 erfassen und diese auf einer relativ kurzen Strecke gleichmäßig mit dem übrigen Abgas vermischen. Der in y-Richtung gesehen mittlere Brenner 18 ist direkt hinter der Wirbelscheibe 16" im Bereich ihrer der Strömung abgewandten Leeseite angeordnet. Dadurch werden die heißen Abgassträhnen 19 dieses Brenners 18 schon von den gerade erst in der Entstehung begriffenen Vorderkantenwirbeln 17 der Wirbelscheibe 16" ergriffen, wodurch die Homogenisierung des Abgasstroms auf einer besonders kurzen Strecke erfolgen kann. Die Abgassträhnen 19 der beiden näher am Strömungskanalrand gelegenen Brenner 18 werden von den Vorderkantenwirbelsystemen der Wirbelscheiben 16' erfasst und dadurch ebenfalls mit dem Abgasstrom vermischt. Durch die von den Wirbelscheiben 16', 16" erzeugten Vorderkantenwirbel 17 ist das Abgas im Eintrittsbereich 27 des Abhitzekessels 11 gleichmäßig über den Strömungsquerschnitt verteilt und die heißen Abgassträhnen 19 sind mit dem restlichen Abgas komplett vermischt.

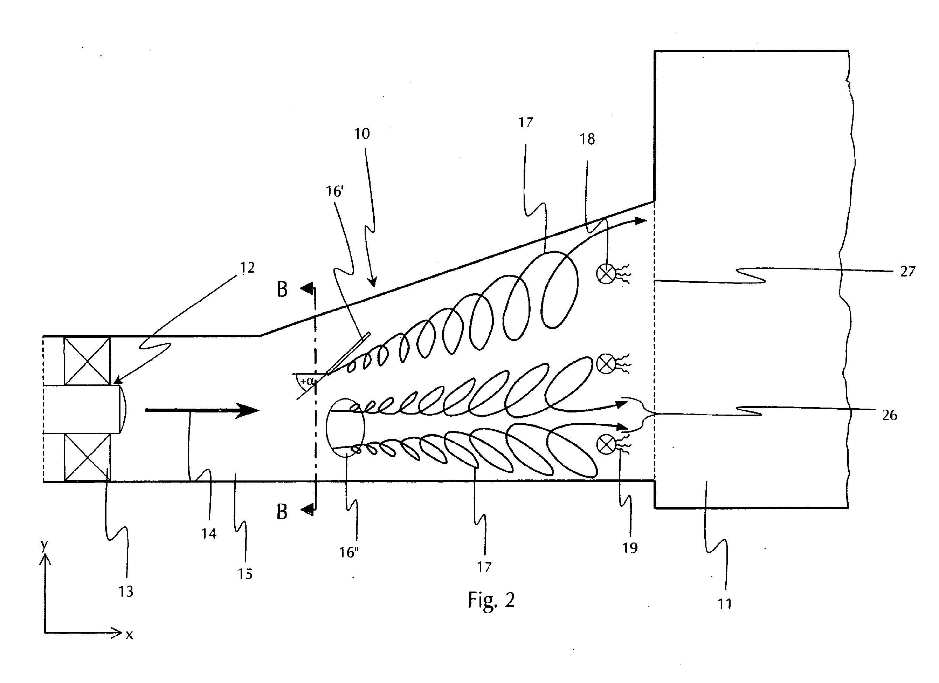

Fig. 2 zeigt eine weitere Abgasführung 10, bei der sich der Strömungsquerschnitt des Strömungskanals 15 nur zur oberen Seite hin in Hauptströmungsrichtung 14 aufweitet. Die untere Wand verläuft von der Gasturbine 12 bis zum Abhitzekessel 11 in x-Richtung. Am stromaufwärtigen Teil des divergierenden Abschnitts des Strömungskanals 15 sind zwei in y-Richtung übereinander liegende Wirbelscheiben 16' und 16" angeordnet. Diese Wirbelscheiben 16' und 16" sind gegenüber der Hauptströmungsrichtung 14 genauso abgewinkelt, wie ihre Gegenstücke aus Fig. 1. Die Wirbelscheibe 16' ist so ausgerichtet, dass die von ihr erzeugten Vorderkantenwirbel 17, ebenso wie bei ihren Gegenstücken aus Fig. 1, durchgängig an der sich aufweitenden Strömungskanalwand anliegen, so dass ein Abreißen der Strömung durch den sich aufweitenden Querschnitt des Strömungskanals 15 vermieden wird. Diese Vorderkantenwirbel 17 der Wirbelscheibe 16' vermischen im Zusammenspiel mit dem von der Wirbelscheibe 16" erzeugten Vorderkantenwirbelsystem 26 den Abgasstrom mit den heißen Abgassträhnen 19 der Brenner 18 und stellen eine gleichmäßige Verteilung des Abgasstroms über den Strömungsquerschnitt im Eintrittsbereich 27 des Abhitzekessels 11 sicher.

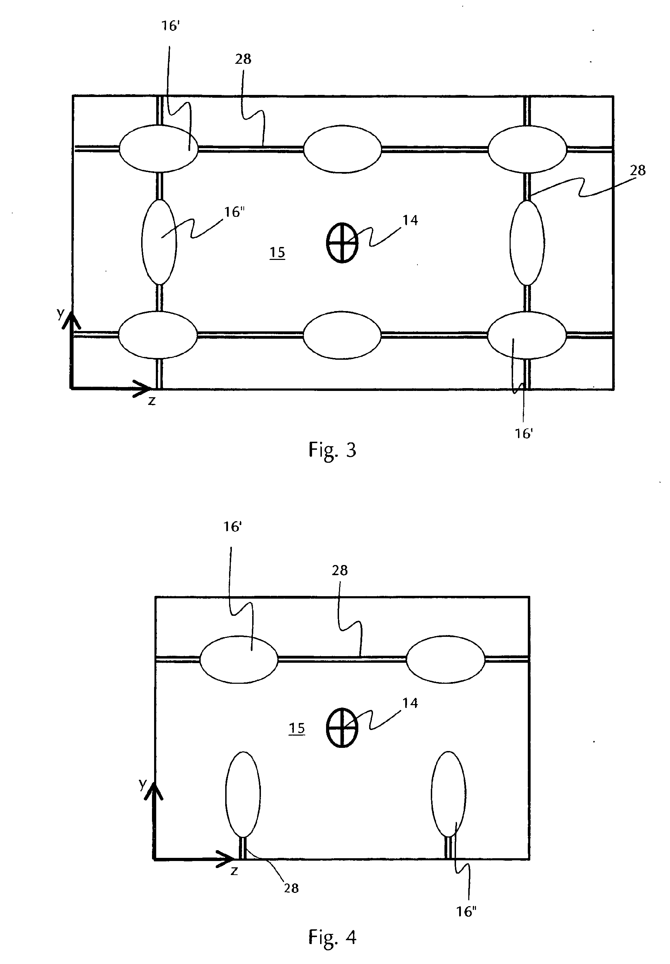

Die Fig. 3 zeigt den Schnitt A-A aus Fig. 1 und Fig. 4 zeigt den Schnitt B-B aus Fig. 2. Fig. 3 und 4 zeigen somit jeweils einen Querschnitt des Strömungskanals 15, so dass die Hauptströmungsrichtung 14 in die Zeichenebene hineinverläuft.

Im Strömungskanal 15 aus Fig. 3 sind in z-Richtung zwei übereinander liegende Reihen mit jeweils drei nebeneinander angeordneten Wirbelscheiben 16' vorgesehen. In y-Richtung zwischen diesen zwei Reihen sind zwei nebeneinander angeordnete Wirbelscheiben 16" angeordnet. Die zwei in z-Richtung verlaufenden Reihen der Wirbelscheiben 16' sind jeweils an einem Befestigungsrohr 28 befestigt, das in z-Richtung von einer Kanalseite zur anderen verläuft, und an dem alle drei Wirbelscheiben 16' einer Reihe befestigt sind. Die Wirbelscheiben 16" sind jeweils an einem separaten Befestigungsrohr 28 befestigt, welches in y-Richtung vom oberen Rand des Strömungskanals 15 bis zu dessen unterem Rand verläuft. Die Wirbelscheiben 16', 16" sind jeweils fest an den Befestigungsrohren 28 angebracht, so dass durch eine Drehung der Befestigungsrohre 28 der Anstellwinkel der Wirbelscheiben 16', 16" veränderbar ist. Die Befestigungsrohre 28 sind so ausgebildet, dass sie von außerhalb des Strömungskanals 15 drehbar sind. Da die in z-Richtung nebeneinander angeordneten Wirbelscheiben 16' gemeinsam an einem Befestigungsrohr 28 montiert sind, können diese auch nur gemeinsam verstellt werden. Dahingegen sind die Wirbelscheiben 16" jeweils an einem separaten Befestigungsrohr 28 befestigt und deren Anstellwinkel kann somit einzeln verstellt werden.

In Fig. 4 ist erkennbar, dass in z-Richtung jeweils zwei Wirbelscheiben 16' und zwei Wirbelscheiben 16" nebeneinander angeordnet sind. Auch hier sind die Wirbelscheiben 16' an einem gemeinsamen Befestigungsrohr 28 befestigt, wohingegen die Wirbelscheiben 16" jeweils an einem separaten Befestigungsrohr 28 montiert sind. Die Befestigungsrohre 28 der Wirbelscheiben 16" verlaufen im Gegensatz zu denen aus Fig. 3 allerdings nicht von oben nach unten einmal durch den kompletten Strömungskanal 15 hindurch. Statt dessen sind diese Befestigungsrohre 28 am unteren Kanalrand befestigt und verlaufen in y-Richtung in den Strömungskanal 15 hinein bis auf Höhe der Wirbelscheiben 16", wo sie enden.

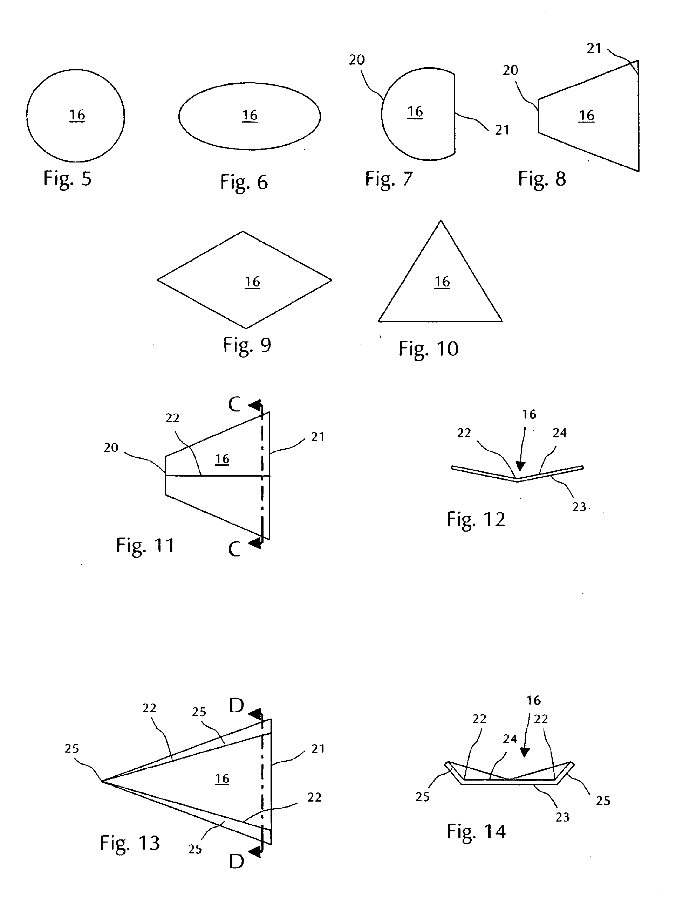

In den Fig. 5 bis 14 sind verschiedenen Ausführungsformen von Wirbelscheiben 16 gezeigt. Bei der in Fig. 5 gezeigten Wirbelscheibe 16 handelt es sich um eine Scheibe mit kreisförmiger Grundfläche. Die in Fig. 6 gezeigte Scheibe hat eine elliptische Grundfläche. Die in Fig. 7 gezeigte Scheibe ist ebenfalls eine rundliche Wirbelscheibe, die allerdings eine abgeflachte Hinterkante 21 aufweist. Diese Wirbelscheibe 16 ist so in der Strömung anzuordnen, dass die rundliche Vorderkante 20 der Strömung entgegengerichtet ist und die abgeflachte Hinterkante 21 der Strömung abgewandt ist. Die in Fig. 8 gezeigte Wirbelscheibe 16 hat eine trapezförmige Grundfläche, wobei die schmalere Vorderkante 20 der Strömung entgegengerichtet ist und die breitere Hinterkante 21 der Strömung abgewandt ist. Die in Fig. 8 gezeigte Wirbelscheibe 16 wird also ebenso wie die in Fig. 7 gezeigte Wirbelscheibe 16 von links nach rechts umströmt. Die in Fig. 9 gezeigte Scheibe hat eine rautenförmige Grundfläche und die in Fig. 10 gezeigte Scheibe hat eine dreiecksförmige Grundfläche.

Eine weitere Ausführungsform einer trapezförmigen Wirbelscheibe 16 ist in den Fig. 11 und 12 dargestellt. Hier weist die Wirbelscheibe 16 eine Knick 22 auf, der sich in Strömungsrichtung in der Mitte der Grundfläche der Wirbelscheibe 16 von der schmaleren Vorderkante 20 bis zur breiteren Hinterkante 21 erstreckt. Der Knick 22 verläuft, wie man in Fig. 12, in der der in Fig. 11 angedeutete Schnitt C-C dargestellt ist, erkennen kann, so, dass die der Strömung zugewandte Seite 23 (die sogenannte Luvseite) der Wirbelscheibe 16 in Strömungsseitenrichtung etwas nach hinten abfällt, während die der Strömung abgewandte Oberseite 24 (die sogenannte Leeseite) der Wirbelscheibe 16 hohl geformt ist. Diese Formgebung führt zu einer Verstärkung der Vorderkantenwirbel und zu einer mechanischen Stabilisierung der Wirbelscheibe 16.

In den Fig. 13 und 14 ist eine weitere Ausführungsform einer Wirbelscheibe 16 gezeigt, die eine in der Draufsicht dreieckige Grundfläche aufweist. Zudem sind zwei Knicke 22 vorgesehen, die von der Spitze 25 der Wirbelscheibe 16 radial zu deren Hinterkante 21 verlaufen. In Fig. 14 ist der in Fig. 13 angedeutete Schnitt D-D gezeigt. Die beiden durch die Knicke 22 von der Grundfläche getrennten Seiten 27 sind abgewinkelt. Die Wirbelscheibe 16 aus den Fig. 13 und 14 wird genau wie die Wirbelscheibe 16 aus den Fig. 11 und 12 in der Strömung ausgerichtet. Die angeströmte Oberfläche 23 der Wirbelscheibe 16 ist also an ihren Seitenrändern gegenüber der Strömung abgewinkelt, während der mittlere Bereich eben ausgeformt ist. Die der Strömung abgewandte Oberseite 24 der Wirbelscheibe 16 ist also wiederum hohl ausgeformt.

## Patentansprüche

1. Abgasführung (10) einer Gasturbine (12), welche zwischen der Gasturbine (12) und einem nachgeschalteten Abhitzekessel (11) angeordnet ist und welche einen Strömungskanal (15) umfasst, der zumindest bereichsweise einen sich in Hauptströmungsrichtung aufweitenden Querschnitt aufweist, mit die Strömung beeinflussenden Einbauflächen, wobei die Einbauflächen eine Vorderkantenwirbel (17) erzeugende Wirbelvorrichtung sind, die im divergierenden Bereich des Strömungskanals (15) angeordnet ist und die ausgebildet ist, den Abgasstrom beim Eintritt in den Abhitzekessel (11) gleichmäßig über die Strömungsquerschnittsfläche zu verteilen, mit mindestens einem im Strömungskanal (15) angeordneten Brenner (18) für eine Zusatzfeuerung des Abgasstroms, wobei die Wirbelvorrichtung ausgebildet ist, die vom mindestens einen Brenner (18) erzeugten heißen Abgassträhnen (19) mit dem restlichen Abgas zu vermischen, wobei die Wirbelvorrichtung in Hauptströmungsrichtung (14) stromaufwärts vom mindestens einen Brenner (18) angeordnet ist.

2. Abgasführung (10) einer Gasturbine (12), welche zwischen der Gasturbine (12) und einer nachgeschalteten Gasweiche angeordnet ist und welche einen Strömungskanal (15) umfasst, der zumindest bereichsweise einen sich in Hauptströmungsrichtung aufweitenden Querschnitt aufweist, mit die Strömung beeinflussenden Einbauflächen, wobei die Einbauflächen eine Vorderkantenwirbel (17) erzeugende Wirbelvorrichtung sind, die im divergierenden Bereich des Strömungskanals (15) angeordnet ist und die ausgebildet ist, den Abgasstrom beim Eintritt in die Gasweiche gleichmäßig über die Strömungsquerschnittsfläche zu verteilen, mit mindestens einem im Strömungskanal (15) angeordneten Brenner (18) für eine Zusatzfeuerung des Abgasstroms, wobei die Wirbelvorrichtung ausgebildet ist, die vom mindestens einen Brenner (18) erzeugten heißen Abgassträhnen (19) mit dem restlichen Abgas zu vermischen, wobei die Wirbelvorrichtung in Hauptströmungsrichtung (14) stromaufwärts vom mindestens einen Brenner (18) angeordnet ist.

3. Abgasführung gemäß Anspruch 1 oder 2,
**dadurch gekennzeichnet,**
**dass** der mindestens eine Brenner (18) im Bereich hinter einer Anströmkante der Wirbelvorrichtung angeordnet ist.

4. Abgasführung gemäß einem der Ansprüche 1 bis 3,
**dadurch gekennzeichnet,**
**dass** mehrere Brenner (18) vorhanden sind, wobei die Wirbelvorrichtung ausgebildet ist, die heißen Abgassträhnen (19) sämtlicher Brenner (18) mit dem restlichen Abgas zu vermischen.

5. Abgasführung gemäß einem der vorangegangenen Ansprüche,
**dadurch gekennzeichnet,**
**dass** die Wirbelvorrichtung so ausgebildet ist, dass der Abgasstrom beim Eintritt in den Abhitzekessel (11) oder in die Gasweiche eine über den Strömungsquerschnitt im Wesentlichen konstante Geschwindigkeit aufweist.

6. Abgasführung gemäß einem der vorangegangenen Ansprüche, wobei der von der Gasturbine (12) in die Abgasführung (10) abgeführte Abgasstrom einen Globaldrall um die Hauptströmungsachse aufweist,
**dadurch gekennzeichnet,**
**dass** die Wirbelvorrichtung so ausgebildet ist, dass die von der Wirbelvorrichtung erzeugten Vorderkantenwirbel (17) den Globaldrall des Abgasstroms vor Eintritt in den Abhitzekessel (11) oder in die Gasweiche im Wesentlichen eliminieren.

7. Abgasführung gemäß einem der vorangegangenen Ansprüche,
**dadurch gekennzeichnet,**
**dass** die Wirbelvorrichtung wenigstens eine Wirbelscheibe (16, 16', 16") aufweist.

8. Abgasführung gemäß Anspruch 7,
**dadurch gekennzeichnet,**
**dass** mehrere Wirbelscheiben (16, 16', 16") nebeneinander in einem Strömungsquerschnitt angeordnet sind.

9. Abgasführung gemäß Anspruch 7 oder 8,
**dadurch gekennzeichnet,**
**dass** mehrere Wirbelscheiben (16, 16', 16") in Strömungsrichtung (14) kaskadierend angeordnet sind.

10. Abgasführung gemäß einem der Ansprüche 7 bis 9,
**dadurch gekennzeichnet,**
**dass** der Anstellwinkel (α) der wenigstens einen Wirbelscheibe (16, 16', 16") in Bezug auf die Hauptströmungsrichtung (14) verstellbar ist.

11. Verfahren zum Vermischen des Abgases einer Gasturbine (12) innerhalb eines Strömungskanals (15), der zumindest bereichsweise einen sich in Hauptströmungsrichtung aufweitenden Querschnitt aufweist, mit heißen Abgassträhnen (19), die durch mindestens einen im Strömungskanal (15) angeordneten Brenner (18) erzeugt werden,
**dadurch gekennzeichnet,**
**dass** wenigstens ein Vorderkantenwirbelsystem (26) im divergierenden Bereich des Strömungskanals (15) zur Vermischung des Abgases mit den heißen Abgassträhnen (19) erzeugt wird, wobei das Vorderkantenwirbelsystem aus zwei, gegeneinander und nach Innen verdrehenden Vorderkantenwirbeln besteht, und wobei das Vorderkantenwirbelsystem von einer Wirbelscheibe erzeugt wird.

12. Verfahren gemäß Anspruch 11, wobei der Abgasstrom beim Verlassen der Gasturbine (12) einen Globaldrall um die Hauptströmungsachse aufweist,
**dadurch gekennzeichnet,**
**dass** das wenigstens eine Vorderkantenwirbelsystem (26) so ausgebildet ist, dass der Globaldrall des Abgasstroms im Wesentlichen aufgehoben wird.

## Claims

1. Exhaust gas guide (10) of a gas turbine (12), which is arranged between the gas turbine (12) and a downstream waste heat boiler (11) and which comprises a flow channel (15) which has a cross-section expanding in at least some areas in the main flow direction and has installed surfaces influencing the flow, said installed surfaces being a swirl device generating leading edge swirls (17), said swirl device being arranged in the diverging area of the flow channel (15) and being implemented so as to distribute the exhaust gas flow uniformly over the flow cross-sectional area upon entry into the waste heat boiler (11), with at least one burner (18) arranged inside the flow channel (15) for auxiliary firing of the exhaust gas flow, the swirl device being implemented to mix the hot exhaust gas streams (19) generated by the at least one burner (18) with the remaining exhaust gas, the swirl device being arranged upstream of the at least one burner (18) as regarded in the main flow direction (14).

2. Exhaust gas guide (10) of a gas turbine (12), which is arranged between the gas turbine (12) and a downstream gas diverter and which comprises a flow channel (15) which has a cross-section expanding in at least some areas in the main flow direction and has installed surfaces influencing the flow, said installed surfaces being a swirl device generating leading edge swirls (17), said swirl device being arranged in the diverging area of the flow channel (15) and being implemented so as to distribute the exhaust gas flow uniformly over the flow cross-sectional area upon entry into the gas diverter, with at least one burner (18) arranged inside the flow channel (15) for auxiliary firing of the exhaust gas flow, the swirl device being implemented to mix the hot exhaust gas streams (19) generated by the at least one burner (18) with the remaining exhaust gas, the swirl device being arranged upstream of the at least one burner (18) as regarded in the main flow direction (14).

3. The exhaust gas guide according to claim 1 or 2,
**characterized in that**
the at least one burner (18) is arranged in the area behind a face edge of the swirl device.

4. The exhaust gas guide according to any one of claims 1 to 3,
**characterized in that**
multiple burners (18) are provided, the swirl device being implemented to mix the hot exhaust gas streams (19) of all burners (18) with the remaining exhaust gas.

5. The exhaust gas guide according to any one of the preceding claims,
**characterized in that**
the swirl device is implemented in such a way that the exhaust gas flow has a velocity which is essentially uniform over the flow cross-section upon entry into the waste heat boiler (11) or the gas diverter.

6. The exhaust gas guide according to any one of the preceding claims, the exhaust gas flow removed from the gas turbine (12) into the exhaust gas guide (10) having a global twist about the main flow axis,
**characterized in that**
the swirl device is implemented in such a way that the leading edge swirls (17) generated by the swirl device essentially eliminate the global twist of the exhaust gas flow before entry into the waste heat boiler (11) or the gas diverter.

7. The exhaust gas guide according to any one of the preceding claims,
**characterized in that**
the swirl device has at least one swirl disk (16, 16', 16").

8. The exhaust gas guide according to claim 7,
**characterized in that**
multiple swirl disks (16, 6', 16") are arranged neighboring one another in a flow cross-section.

9. The exhaust gas guide according to claim 7 or 8,
**characterized in that**
multiple swirl disks (16, 16', 16") are arranged in a cascade in the flow direction (14).

10. The exhaust gas guide according to any one of claims 7 to 9,
**characterized in that**
the angle of attack (α) of the at least one swirl disk (16, 16', 16") is adjustable in relation to the main flow direction (14).

11. A method for mixing the exhaust gas of a gas turbine (12) inside a flow channel (15) which has a cross-section expanding in the main flow direction in at least some areas, with hot exhaust gas streams (19), which are generated by at least one burner (18) situated in the flow channel (15),
**characterized in that**
at least one leading edge swirl system (26) is generated in the diverging area of the flow channel (15) to mix the exhaust gas with the hot exhaust gas streams (19), said leading edge swirl system consisting of two leading edge swirls rotating inwardly and opposite to each other, and said leading edge swirl system being generated by a swirl disk.

12. The method according to claim 11, the exhaust gas flow having a global twist about the main flow axis upon leaving the gas turbine (12),
**characterized in that**
said at least one leading edge swirl system (26) is implemented in such a way that the global twist of the exhaust gas flow is essentially canceled out.

## Revendications

1. Conduit d'évacuation (10) des gaz d'échappement d'une turbine à gaz (12), qui est disposé entre la turbine à gaz (12) et une chaudière de récupération (11) située en aval et qui comprend un canal d'écoulement (15) qui possède une section transversale se développant dans au moins certaines zones dans la direction du flux principal et où sont installées des surfaces influençant l'écoulement, lesdites surfaces installées étant un dispositif de turbulence créant des turbulences (17) de bord d'attaque, ledit dispositif de turbulence étant disposé dans la zone de divergence du canal d'écoulement (15) et étant mis en oeuvre de manière à répartir le flux des gaz d'échappement de manière uniforme sur l'aire en section transversale à l'entrée de la chaudière de récupération (11), avec au moins un brûleur (18) disposé à l'intérieur du canal d'écoulement (15) pour une combustion auxiliaire du flux de gaz d'échappement, le dispositif de turbulence étant mis en oeuvre de manière à mélanger les flux (19) des gaz d'échappement chauds générés par ledit au moins un brûleur (18) avec les gaz d'échappement restants, le dispositif de turbulence étant disposé en amont dudit au moins un brûleur (18) tel que vu dans la direction (14) du flux principal.

2. Conduit d'évacuation (10) des gaz d'échappement d'une turbine à gaz (12), qui est disposé entre la turbine à gaz (12) et un répartiteur de gaz situé en aval, et qui comprend un canal d'écoulement (15) qui possède une section transversale se développant dans au moins certaines zones dans la direction du flux principal et où sont installées des surfaces influençant l'écoulement, lesdites surfaces installées étant un dispositif de turbulence créant des turbulences (17) de bord d'attaque, ledit dispositif de turbulence étant disposé dans la zone de divergence du canal d'écoulement (15) et étant mis en oeuvre de manière à répartir le flux des gaz d'échappement de manière uniforme sur l'aire en section transversale à l'entrée du répartiteur de gaz, avec au moins un brûleur (18) disposé à l'intérieur du canal d'écoulement (15) pour une combustion auxiliaire du flux de gaz d'échappement, le dispositif de turbulence étant mis en oeuvre de manière à mélanger les flux (19) des gaz d'échappement chauds générés par ledit au moins un brûleur (18) avec les gaz d'échappement restants, le dispositif de turbulence étant disposé en amont dudit au moins un brûleur (18) tel que vu dans la direction (14) du flux principal.

3. Conduit d'évacuation des gaz d'échappement selon la revendication 1 ou 2,
**caractérisé en ce que**
ledit au moins un brûleur (18) est disposé dans la zone située derrière un bord d'afflux du dispositif de turbulence.

4. Conduit d'évacuation des gaz d'échappement selon l'une quelconque des revendications 1 à 3,
**caractérisé en ce que**
une pluralité de brûleurs (18) sont prévus, le dispositif de turbulence étant mis en oeuvre de manière à mélanger les flux (19) de gaz d'échappement chauds de tous les brûleurs (18) avec le gaz d'échappement restant.

5. Conduit d'évacuation des gaz d'échappement selon l'une quelconque des revendications précédentes,
**caractérisé en ce que**
le dispositif de turbulence est mis en oeuvre de telle manière que le flux de gaz d'échappement possède une vélocité qui est essentiellement uniforme sur la section transversale de l'écoulement à l'entrée de la chaudière de récupération (11) ou dans le répartiteur de gaz.

6. Conduit d'évacuation des gaz d'échappement selon l'une quelconque des revendications précédentes, le flux des gaz d'échappement extrait de la turbine à gaz (12) et envoyé dans le conduit d'évacuation (10) des gaz d'échappement ayant une torsion globale autour de l'axe du flux principal
**caractérisé en ce que**
le dispositif de turbulence est mis en oeuvre de telle manière que les turbulences (17) de bord d'attaque générées par le dispositif de turbulence éliminent essentiellement la torsion globale du flux des gaz d'échappement avant l'entrée dans la chaudière de récupération (11) ou dans le répartiteur de gaz.

7. Conduit d'évacuation des gaz d'échappement selon l'une quelconque des revendications précédentes,
**caractérisé en ce que**
le dispositif de turbulence possède au moins un disque de turbulence (16, 16', 16").

8. Conduit d'évacuation des gaz d'échappement selon la revendication 7,
**caractérisé en ce que**
une pluralité de disques de turbulence (16, 16', 16") sont disposés au voisinage les uns des autres dans une section transversale d'écoulement.

9. Conduit d'évacuation des gaz d'échappement selon la revendication 7 ou 8,
**caractérisé en ce que**
une pluralité de disques de turbulence (16, 16', 16") sont disposés en cascade dans la direction du flux (14).

10. Conduit d'évacuation des gaz d'échappement selon l'une quelconque des revendications 7 à 9,
**caractérisé en ce que**
l'angle d'attaque (α) dudit au moins un disque de turbulence (16, 16', 16") est réglable par rapport à la direction (14) du flux principal.

11. Procédé de mélange des gaz d'échappement d'une turbine à gaz (12) à l'intérieur d'un canal d'écoulement (15) qui possède une section transversale se développant dans la direction du flux principal au moins dans certaines zones, avec des flux (19) de gaz d'échappement chauds qui sont générés par au moins un brûleur (18) situé dans le canal d'écoulement (15), **caractérisé en ce que**
au moins un système (26) de turbulence de bord d'attaque est créé dans la zone de divergence du canal d'écoulement (15) pour mélanger les gaz d'échappement avec les flux (19) de gaz d'échappement chauds, ledit système de turbulence de bord d'attaque étant constitué de deux turbulences de bord d'attaque tournant vers l'intérieur et de manière opposée entre elles, et ledit système de turbulence du bord d'attaque étant généré par un disque de turbulence.

12. Procédé selon la revendication 11, le flux de gaz d'échappement ayant une torsion globale autour de l'axe du flux principal en quittant la turbine à gaz (12),
**caractérisé en ce que**
ledit au moins un système (26) de turbulence de bord d'attaque est mis en oeuvre de telle manière que la torsion globale du flux de gaz d'échappement soit essentiellement éliminée.
